# EUROPEAN PATENT SPECIFICATION

(11) **EP 4 138 509 B1**
(45) Date of publication and mention of the grant of the patent: **29.04.2026**
(21) Application number: 21804339.6
(22) Date of filing: 14.05.2021
(51) Int. Cl.: H04W 76/32, H04W 76/23, H04W 92/18

(54) **APPARATUS AND METHOD FOR PROCESSING SIDELINK MAC RESET IN WIRELESS COMMUNICATION SYSTEM**
VORRICHTUNG UND VERFAHREN ZUR VERARBEITUNG VON SIDELINK-MAC-RÜCKSETZUNG IN EINEM DRAHTLOSKOMMUNIKATIONSSYSTEM
APPAREIL ET PROCÉDÉ DE TRAITEMENT D'UNE RÉINITIALISATION DE MAC DE LIAISON LATÉRALE DANS UN SYSTÈME DE COMMUNICATION SANS FIL

(30) Priority: 14.05.2020 KR 20200057912
(43) Date of publication of application: 22.02.2023
(73) Proprietor: Samsung Electronics Co., Ltd., Suwon-si, Gyeonggi-do 16677 (KR)
(72) Inventor: KANG, Hyunjeong, Suwon-si, Gyeonggi-do 16677 (KR); AGIWAL, Anil, Suwon-si, Gyeonggi-do 16677 (KR)
(74) Representative: Gulde & Partner
(86) International application number: PCT/KR2021/006053
(87) International publication number: WO 2021/230697

(56) References cited:
- EP-A1- 4 193 786
- WO-A1-2019/066558
- WO-A1-2019/066558
- WO-A1-2021/040361
- WO-A1-2022/027440
- KR-A- 20200 020 428
- KR-A- 20200 043 457
- US-A1- 2020 137 637
- ERICSSON (RAPPORTEUR): "Capturing RRC Positioning Impacts after RAN2-109bis", vol. RAN WG2, no. Electronic; 20200420 - 20200430, 11 May 2020 (2020-05-11), XP051882800, Retrieved from the Internet <URL:https://ftp.3gpp.org/tsg_ran/WG2_RL2/TSGR2_109bis-e/Docs/R2-2003880.zip R2-2003880.docx> [retrieved on 20200511]
- ERICSSON (RAPPORTEUR): "Capturing RRC Positioning Impacts after RAN2-109bis", 3GPP DRAFT; R2-2003880, vol. RAN WG2, 11 May 2020 (2020-05-11), pages 1 - 816, XP051882800

## Description

### TECHNICAL FIELD

The present disclosure relates to a wireless communication system, and more particularly, to a method and apparatus of a terminal for processing a medium access control (MAC) reset in a wireless communication system.

### BACKGROUND ART

In order to meet increasing demand with respect to wireless data traffic after the commercialization of 4^{th} generation (4G) communication systems, efforts have been made to develop improved 5^{th} generation (5G) or pre-5G communication systems. For this reason, 5G communication systems or pre-5G communication systems are called beyond 4^{th}-generation (4G) network communication systems or post long term evolution (LTE) systems.

In order to achieve a high data rate, consideration is given to implement 5G communication systems in ultra-high frequency bands (millimeter wave (mmW)) (e.g., 60 GHz). To reduce the path loss of radio waves and increase a transmission distance of radio waves in ultra-high frequency bands, for 5G communication systems, technologies such as beamforming, massive multiple-input multiple-output (MIMO), full dimensional MIMO (FD-MIMO), array antenna, analog beamforming, and large scale antenna have been discussed.

Also, in order to improve networks of systems, in 5G communication systems, development of technologies such as evolved small cell, advanced small cell, cloud radio access network (cloud RAN), ultra-dense network, device-to-device (D2D) communication, wireless backhaul, moving network, cooperative communication, coordinated multi-points (CoMP), and received-interference cancellation is underway.

Furthermore, in 5G communication systems, development of an advanced coding modulation (ACM) scheme such as hybrid frequency-shift keying and quadrature amplitude modulation (FSK-QAM; FQAM) or sliding window superposition coding (SWSC) and an advanced network access scheme such as filter bank multi-carrier (FBMC), non-orthogonal multiple access (NOMA), sparse code multiple access (SCMA) and the like, is underway.

The Internet is evolving from a human-centered connection network through which humans create and consume information to an Internet of Things (IoT) network through which distributed elements such as objects exchange and process information. Internet of Everything (IoE) technology, which is a combination of IoT technology and big data processing technology through connection with a cloud server, is also emerging. In order to implement the loT, technology elements such as sensing technology, wired/wireless communication and network infrastructure, service interface technology, and security technology are required, and thus, technology for inter-object connection, such as a sensor network, machine to machine (M2M) communication, or machine-type communication (MTC), has recently been studied. In an loT environment, intelligent Internet technology (IT) services that collect and analyze data generated by connected objects and create new value in human life may be provided. The loT may be applied to fields such as smart homes, smart buildings, smart cities, smart cars or connected cars, smart grids, health care, smart home appliances, and advanced medical services through convergence and integration of existing information technology (IT) and various industries.

Accordingly, various attempts have been made to apply 5G communication systems to IoT networks. For example, technology such as sensor network, M2M communication, or MTC is implemented by 5G communication technology such as beamforming, MIMO, or array antenna. The application of a cloud RAN as big data processing technology may also be considered as an example of convergence of 5G technology and loT technology.

Also, sidelink communication using 5G communication systems has been studied, and it is expected that sidelink communication may be applied to vehicular communication (e.g., vehicle-to-everything (V2X) communication) to provide various services to users.

The following prior art is related to medium access control reset in a wireless communication system:
ERICSSON (RAPPORTEUR): "Capturing RRC Positioning Impacts after RAN2-109bis", 3GPP DRAFT; R2-2003880, pages 169 to 181, and
WO 2019/066558 A1 (LG ELECTRONICS INC [KR]) 4 April 2019, paragraphs [0053, 0073, 0097, 0099 to 0107].

### DESCRIPTION OF EMBODIMENTS

### SOLUTION TO PROBLEM

The present disclosure provides an apparatus and method of a terminal for processing a medium access control (MAC) reset in a wireless communication system as defined in the appended claims.

Also, the present disclosure provides an apparatus and method of a terminal for processing sidelink MAC configuration when processing a MAC reset of a Uu interface in a wireless communication system. The present disclosure provides an apparatus and method of a terminal for processing a MAC reset of a sidelink interface in a wireless communication system.

### BRIEF DESCRIPTION OF DRAWINGS

FIG. 1 illustrates a wireless communication system, according to an embodiment of the present disclosure.
FIG. 2 illustrates a configuration of a base station in a wireless communication system, according to an embodiment of the present disclosure.
FIG. 3 illustrates a configuration of a terminal in a wireless communication system, according to an embodiment of the present disclosure.
FIG. 4 illustrates a configuration of a communicator in a wireless communication system, according to an embodiment of the present disclosure.
FIG. 5 illustrates a structure of radio time-frequency resources of a wireless communication system, according to an embodiment of the present disclosure.
FIG. 6A is a diagram illustrating a scenario for sidelink communication, according to an embodiment of the present disclosure.
FIG. 6B is a diagram illustrating a scenario for sidelink communication, according to an embodiment of the present disclosure.
FIG. 6C is a diagram illustrating a scenario for sidelink communication, according to an embodiment of the present disclosure.
FIG. 6D is a diagram illustrating a scenario for sidelink communication, according to an embodiment of the present disclosure.
FIG. 7A is a view for describing a transmission method of sidelink communication, according to an embodiment of the present disclosure.
FIG. 7B is a view for describing a transmission method of sidelink communication, according to an embodiment of the present disclosure.
FIG. 8A is a diagram illustrating an operation in which a UE processes a medium access control (MAC) reset, according to an embodiment of the present disclosure.
FIG. 8B is a diagram illustrating an operation in which a UE processes a MAC reset, according to an embodiment of the present disclosure.
FIG. 9A is a diagram illustrating an operation in which a UE processes a MAC reset, according to an embodiment of the present disclosure.
FIG. 9B is a diagram illustrating an operation in which a UE processes a MAC reset, according to an embodiment of the present disclosure.
FIG. 10 is a diagram illustrating an operation in which a UE processes a MAC reset, according to an embodiment of the present disclosure.
FIG. 11 is a diagram illustrating an operation in which a UE processes a sidelink broadcast message, according to an embodiment of the present disclosure.

### MODE OF DISCLOSURE

Hereinafter, exemplary embodiments of the present disclosure will be described in detail with reference to accompanying drawings. In the accompanying drawings, it will be understood that like reference numerals denote like elements. Also, detailed descriptions of well-known functions and configurations in the art are omitted when it is deemed that they may unnecessarily obscure the essence of the present disclosure.

In the following description of embodiments in the specification, descriptions of techniques that are well known in the art and are not directly related to the present disclosure are omitted. This is to clearly convey the gist of the present disclosure by omitting an unnecessary description.

For the same reason, some elements in the accompanying drawings are exaggerated, omitted, or schematically illustrated. In addition, the size of each element may not substantially reflect its actual size. In the drawings, the same or corresponding elements are denoted by the same reference numerals.

The advantages and features of the present disclosure and methods of achieving them will become apparent with reference to embodiments of the present disclosure described in detail below along with the attached drawings. The present disclosure may, however, be embodied in many different forms and should not be construed as limited to embodiments of the present disclosure set forth herein; rather these embodiments of the present disclosure are provided so that this disclosure will be thorough and complete, and will fully convey the scope of the present disclosure to one of ordinary skill in the art, and the scope of the present disclosure is defined only by the accompanying claims. In the specification, the same reference numerals denote the same elements.

It will be understood that each block of flowchart illustrations and combinations of blocks in the flowchart illustrations may be implemented by computer program instructions. Because these computer program instructions may be loaded into a processor of a general-purpose computer, special purpose computer, or other programmable data processing equipment, the instructions, which are executed via the processor of the computer or other programmable data processing equipment generate means for implementing the functions specified in the flowchart block(s). Because these computer program instructions may also be stored in a computer-executable or computer-readable memory that may direct the computer or other programmable data processing equipment to function in a particular manner, the instructions stored in the computer- executable or computer-readable memory may produce an article of manufacture including instruction means for performing the functions specified in the flowchart block(s). Because the computer program instructions may also be loaded into a computer or other programmable data processing equipment, a series of operational steps may be performed on the computer or other programmable data processing equipment to produce a computer implemented process, and thus, the instructions executed on the computer or other programmable data processing equipment may provide steps for implementing the functions specified in the flowchart block(s).

Also, each block may represent a module, segment, or portion of code, which includes one or more executable instructions for implementing specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

The term "... unit" used in the present embodiment refers to a software or hardware component, such as a field-programmable gate array (FPGA) or an application-specific integrated circuit (ASIC), which performs certain tasks. However, the term "... unit" does not mean to be limited to software or hardware. A "... unit" may be configured to be in an addressable storage medium or may be configured to operate one or more processors. Thus, a "... unit" may include, by way of example, components, such as software components, object-oriented software components, class components, and task components, processes, functions, attributes, procedures, subroutines, segments of program code, drivers, firmware, microcode, circuitry, data, databases, data structures, tables, arrays, and variables. The functionality provided in components and "... units" may be combined into fewer components and "... units" or may be further separated into additional components and "... units". Furthermore, components and "... units" may be implemented to operate one or more central processing units (CPUs) in a device or a secure multimedia card.

When particularly describing embodiments of the present disclosure, a new RAN (NR) that is a radio access network and a packet core (5G system, 5G core network, or NG core: next generation core) that is a core network in 5G mobile communication standards defined by 3^{rd} generation partnership project (3GPP) that is a mobile communication standard organizing group are main targets, but the essential concept of the present disclosure may be modified without departing from the scope of the present disclosure and may be applied to other communication system based on similar technical backgrounds, and the application may be made based on determination by one of ordinary skill in the art.

In 5G systems, a network data collection and analysis function (NWDAF) may be defined to support network automation, the NWDAF referring to a network function for providing a function to analyze and provide data collected over a 5G network. The NWDAF may collect/store/analyze information from the 5G network and may provide a result to an unspecified network function (NF), and an analysis result may be independently used by each NF.

For convenience of explanation, the present disclosure uses some of terms and names defined in the 3^{rd} generation partnership project (3GPP) long term evolution standards (standards of 5G, NR, LTE, or similar systems). However, the present disclosure is not limited to these terms and names, and may be equally applied to communication systems conforming to other standards.

The present disclosure relates to an apparatus and method by which a terminal for performing data transmission/reception through a sidelink interface and a Uu interface (radio interface between a terminal and an evolved universal terrestrial radio access network (EUTRAN) or a next generation radio access network (NGRAN)) processes a medium access control (MAC) reset in a wireless communication system. In detail, the present disclosure provides, when a terminal performs a MAC reset of a Uu interface, a method of processing MAC configuration information of a sidelink interface and a method of processing a MAC reset of a sidelink interface, and relates to a method and apparatus by which a terminal may independently operate a MAC reset of a Uu interface and a MAC reset of a sidelink interface. The method of the present disclosure may be applied when a terminal performs only a MAC reset of a Uu interface, when a terminal performs only a MAC reset of a sidelink interface, and when a terminal performs both the MAC reset of the Uu interface and the MAC reset of the sidelink interface. When it is determined that a terminal performing a MAC reset of a sidelink interface obtains MAC configuration/reconfiguration information, the terminal may perform an operation of configuring/reconfiguring MAC of the sidelink interface based on the MAC configuration/reconfiguration information.

According to embodiments of the present disclosure, because a terminal may maintain data transmission/reception through a sidelink interface even when a MAC reset of a Uu interface occurs, and may maintain data transmission/reception through a Uu interface even when a MAC reset of a sidelink interface occurs, communication interruption due to a MAC reset of another interface which unnecessarily occurs may be prevented and signaling overhead due to a MAC reset may be prevented.

In the following description, the term indicating a signal, the term indicating a channel, the term indicating control information, the term indicating a network entity, the term indicating a component of an apparatus, and the like are exemplified for convenience of explanation. Accordingly, the present disclosure is not limited to the terms, and other terms indicating objects having equal technical meanings may be used.

In the following description, a physical channel and a signal may be interchangeably used with data or a control signal. For example, although a physical downlink shared channel (PDSCH) is a term indicating a physical channel through which data is transmitted, a PDSCH may also be used to denote data. That is, in the present disclosure, when a 'physical channel is transmitted', it may be interpreted that 'data or a signal is transmitted through a physical channel'.

In the present disclosure, higher layer signaling refers to a signal transmission method of transmitting a signal from a base station to a terminal by using a downlink data channel of a physical layer or transmitting a signal from a terminal to a base station by using an uplink data channel of a physical layer. Higher layer signaling may be understood as radio resource control (RRC) signaling or a media access control (MAC) control element (CE).

Also, in the present disclosure, the expressions such as "greater than" or "less than" are used to determine whether a particular condition is satisfied or fulfilled, but the expressions are only used to express examples and may not exclude meaning of "equal to or greater than" or "equal to or less than". A condition written with "equal to or greater than" may be replaced with "greater than", a condition with "equal to or less than" may be replaced with "less than", and a condition with "equal to or greater than... and less than..." may be replaced with "greater than... and equal to or less than ...".

Also, in the present disclosure, embodiments will now be described by using terms and names defined in some communication standards (e.g., the 3GPP), but the present disclosure is not limited to the terms and names. Embodiments of the present disclosure may be easily modified and applied to other communication systems.

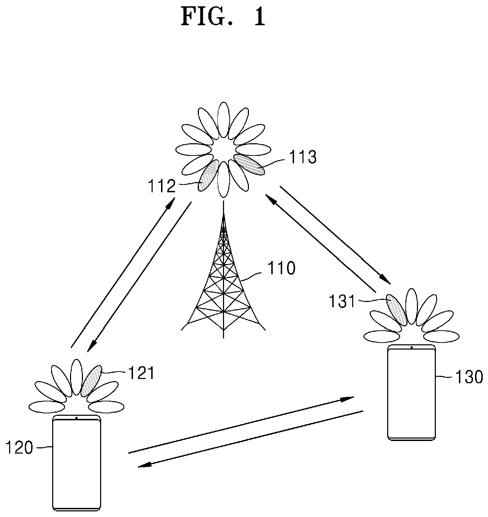

FIG. 1 illustrates a wireless communication system, according to an embodiment of the present disclosure.

FIG. 1 illustrates a base station 110, a terminal 120, and a terminal 130, as parts of nodes using a wireless channel in a wireless communication system. While FIG. 1 illustrates only one base station, another base station same as or similar to the base station 110 may be further included.

The base station 110 refers to a network infrastructure providing radio access to the terminals 120 and 130. The base station 110 has coverage defined as a certain geographical area based on a range for transmitting a signal. The base station 110 may also be referred to as an access point (AP), eNodeB (eNB), 5^{th} generation (5G) node, next generation nodeB (gNB), wireless point, transmission/reception point (TRP), or another term having same technical meaning.

The terminal 120 and the terminal 130 may respectively refer to devices used by users and may perform communication with the base station 110 via wireless channels. A link from the base station 110 to the terminal 120 or the terminal 130 is referred to as a downlink (DL), and a link from the terminal 120 or the terminal 130 to the base station 110 is referred to as an uplink (UL). Also, the terminal 120 and the terminal 130 may perform communication through a wireless channel therebetween. In this case, a link between the terminal 120 and the terminal 130 is referred to as a sidelink, and the sidelink may be referred to as a PC5 interface. In some cases, at least one of the terminal 120 or the terminal 130 may operate without involvement of a user. That is, at least one of the terminal 120 or the terminal 130 may be a device for performing machine-type communication (MTC) and may not be carried by a user. The terminal 120 and the terminal 130 may each be referred to as, in addition to a terminal, a user equipment (UE), a mobile station, a subscriber station, a remote terminal, a wireless terminal, a user device, or another term having the same technical meaning.

The base station 110, the terminal 120, and the terminal 130 may transmit and receive a wireless signal in a millimeter-wave (mmWave) band (e.g., 28 GHz, 30 GHz, 38 GHz, or 60GHz band). In this case, in order to increase a channel gain, the base station 110, the terminal 120, and the terminal 130 may perform beamforming. Here, the beamforming may include transmission beamforming and reception beamforming. That is, the base station 110, the terminal 120, and the terminal 130 may assign directivity to a transmission signal or a reception signal. In this regard, the base station 110 and the terminals 120 and 130 may select serving beams 112, 113, 121, and 131 via a beam search or beam management procedure. After the serving beams 112, 113, 121, and 131 are selected, communication thereafter may be performed by using resources in a quasi-co-located (QCL) relationship with resources transmitting the serving beams 112, 113, 121, and 131.

It may be evaluated that a first antenna port and a second antenna port are in a QCL relationship when large-scale characteristics of a channel through which a symbol on the first antenna port is transmitted are able to be inferred from a channel through which a symbol on the second antenna port is transmitted. For example, the large-scale characteristics may include at least one of delay spread, Doppler spread, Doppler shift, average gain, average delay, or spatial receiver parameter.

The terminal 120 illustrated in FIG. 1 may support vehicular communication. In vehicular communication, in an LTE system, standardization for vehicle-to-everything (V2X) technology based on a device-to-device (D2D) communication structure has been completed in 3GPP Release 14 and Release 15, and currently efforts have been made to develop V2X technology based on 5G NR. NR V2X is to support unicast communication, groupcast (or multicast) communication, and broadcast communication between terminals. Also, unlike LTE V2X aimed for transmission and reception of basic safety information for driving of vehicles on roads, NR V2X is aimed to provide further advanced services such as platooning, advanced driving, extended sensor, and remote driving.

A V2X service may be divided into a basic safety service and an advanced service. The basic safety service may include detailed services such as a cooperative awareness message (CAM) or basic safety message (BSM) service, a left-turn notification service, a vehicle forward collision warning service, an emergency vehicle approach notification service, a front obstacle warning service, an intersection signal information service, and the like. Also, in the basic safety service, V2X information may be transmitted/received by using a broadcast, unicast, or groupcast transmission method. In the advanced service, quality of service (QoS) requirements may be strengthened than in the basic safety service, and there is a need for a method of transmitting/receiving V2X information by using unicast and groupcast transmission methods, other than a broadcast transmission method, so that V2X information is transmitted/received within a particular vehicle group or V2X information is transmitted/received between two vehicles. The advanced service may include detailed services such as a platooning service, an autonomous driving service, a remote driving service, and an extended sensor-based V2X service.

Hereinafter, a sidelink (SL) refers to a signal transmission/reception path between a terminal and a terminal, and may be interchangeably used with a PC5 interface. Hereinafter, a base station that is an entity that allocates a resource to a terminal may be a base station that supports both V2X communication and general cellular communication or a base station that supports only V2X communication. That is, a base station may refer to an NR base station (e.g., gNB), an LTE base station (e.g., eNB), or a road side unit (RSU). Examples of a terminal may include a general UE, an MS, a vehicle supporting vehicle-to-vehicle (V2V) communication, a vehicle or a pedestrian's handset (e.g., a smartphone) supporting a vehicle-to-pedestrian (V2P) communication, a vehicle supporting vehicle-to-network (V2N) communication, a vehicle supporting vehicle-to-infrastructure (V2I) communication, an RSU having embedded therein terminal functions, an RSU having embedded therein BS functions, and an RSU having embedded therein some base station functions and some terminal functions. Also, a V2X terminal used in the following description may be referred to as a terminal. That is, in relation to V2X communication, a terminal may be used as a V2X terminal.

A base station and a terminal are connected to each other through a Uu interface. An uplink (UL) refers to a radio link through which a terminal transmits data or a control signal to a base station, and a downlink (DL) refers to a radio link through which a base station transmits data or a control signal to a terminal.

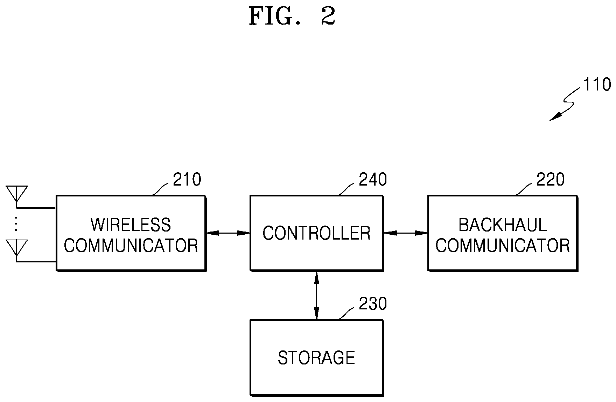

FIG. 2 illustrates a configuration of a base station in a wireless communication system, according to an embodiment of the present disclosure. The configuration illustrated in FIG. 2 may be understood as a configuration of the base station 110. The term "...er/or" or "module" used below indicates a unit, which processes at least one function or operation, and may be implemented by hardware or software, or by a combination of hardware and software.

Referring to FIG. 2, the base station 110 includes a wireless communicator 210, a backhaul communicator 220, a storage 230, and a controller 240.

The wireless communicator 210 performs functions for transmitting and receiving a signal via a wireless channel. For example, the wireless communicator 210 performs conversion between a baseband signal and a bit string, based on physical layer specifications of a system. For example, for data transmission, the wireless communicator 210 generates complex symbols by encoding and modulating a transmission bit string. Also, for data reception, the wireless communicator 210 reconstructs a reception bit string by demodulating and decoding a baseband signal.

Also, the wireless communicator 210 up-converts a baseband signal into a radio frequency (RF) band signal and then transmits the RF band signal via an antenna, and down-converts an RF band signal received via the antenna into a baseband signal. To this end, the wireless communicator 210 may include a transmission filter, a reception filter, an amplifier, a mixer, an oscillator, a digital-to-analog converter (DAC), an analog-to-digital converter (ADC), or the like. Also, the wireless communicator 210 may include a plurality of transmission/reception paths. Furthermore, the wireless communicator 210 may include at least one antenna array including a plurality of antenna elements.

In terms of hardware, the wireless communicator 210 may include a digital unit and an analog unit, and the analog unit may include a plurality of sub-units according to operating power, an operating frequency, or the like. The digital unit may be implemented as at least one processor (e.g., a digital signal processor (DSP)).

The wireless communicator 210 transmits and receives signals as described above. Accordingly, all parts or some parts of the wireless communicator 210 may be referred to as a transmitter, a receiver, or a transceiver. Also, in the following description, transmission and reception performed via a wireless channel indicate that the aforementioned processing is performed by the wireless communicator 210.

The backhaul communicator 220 provides an interface for performing communication with other nodes in a network. That is, the backhaul communicator 220 converts a bit string to a physical signal, the bit string being transmitted from the base station 110 to another node, e.g., another access node, another base station, an upper node, a core network, and/or the like, and converts a physical signal into a bit string, the physical signal being received from another node.

The storage 230 stores basic programs, application programs, and/or data, e.g., configuration information, for operations of the base station 110. The storage 230 may include a volatile memory, a non-volatile memory, or a combination of a volatile memory and a non-volatile memory. Furthermore, the storage 230 provides stored data, in response to a request by the controller 240.

The controller 240 controls overall operations of the base station 110. For example, the controller 240 transmits and receives a signal via the wireless communicator 210 or via the backhaul communicator 220. Also, the controller 240 writes and reads data to and from the storage 230. The controller 240 may perform functions of a protocol stack that are requested by the communication standards. According to another embodiment, the protocol stack may be included in the wireless communicator 210. In this regard, the controller 240 may include at least one processor. According to embodiments, the controller 240 may control the base station 110 to perform operations according to embodiments described below.

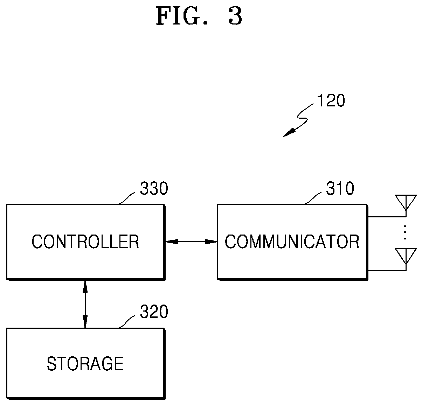

FIG. 3 illustrates a configuration of a terminal in a wireless communication system, according to an embodiment of the present disclosure.

The configuration illustrated in FIG. 3 may be understood as a configuration of the terminal 120. The term "...er/or" or "module" used below indicates a unit, which processes at least one function or operation, and may be implemented by hardware or software, or by a combination of hardware and software.

Referring to FIG. 3, the terminal 120 includes a communicator 310, a storage 320, and a controller 330.

The communicator 310 performs functions for transmitting and receiving a signal via a wireless channel. For example, the communicator 310 may perform conversion between a baseband signal and a bit string, based on physical layer specifications of a system. For example, for data transmission, the communicator 310 generates complex symbols by encoding and modulating a transmission bit string. Also, for data reception, the communicator 310 reconstructs a reception bit string by demodulating and decoding a baseband signal. Also, the communicator 310 up-converts a baseband signal to an RF band signal and then transmits the RF band signal via an antenna, and down-converts an RF band signal received via the antenna into a baseband signal. For example, the communicator 310 may include a transmission filter, a reception filter, an amplifier, a mixer, an oscillator, a DAC, an ADC, and/or the like.

Also, the communicator 310 may include a plurality of transmission/reception paths. Furthermore, the communicator 310 may include at least one antenna array including a plurality of antenna elements. In terms of hardware, the communicator 310 may include a digital circuit and an analog circuit (e.g., a radio frequency integrated circuit (RFIC)). The digital circuit and analog circuit may be implemented in one package. Also, the communicator 310 may include a plurality of RF chains. Furthermore, the communicator 310 may perform beamforming.

The wireless communicator 310 may transmit and receive signals as described above. Accordingly, all parts or some parts of the communicator 310 may be referred to as a 'transmitter', a 'receiver', or a 'transceiver'. Also, in the following description, transmission and reception performed via a wireless channel may indicate that the aforementioned processing is performed by the communicator 310.

The storage 320 stores basic programs, application programs, and/or data, e.g., configuration information, for operations of the terminal 120. The storage 320 may include a volatile memory, a non-volatile memory, or a combination of a volatile memory and a non-volatile memory. Furthermore, the storage 320 provides stored data, in response to a request by the controller 330.

The controller 330 controls overall operations of the terminal 120. For example, the controller 330 transmits and receives a signal via the communicator 310. Also, the controller 330 writes and reads data to and from the storage 320. Also, the controller 330 may perform functions of a protocol stack that are requested by the communication standards. To this end, the controller 330 may include at least one processor or microprocessor or may be a part of a processor. A part of the communicator 310 and the controller 330 may be referred to as a communication processor (CP). According to embodiments, the controller 330 may control the terminal 120 to perform operations according to embodiments described below.

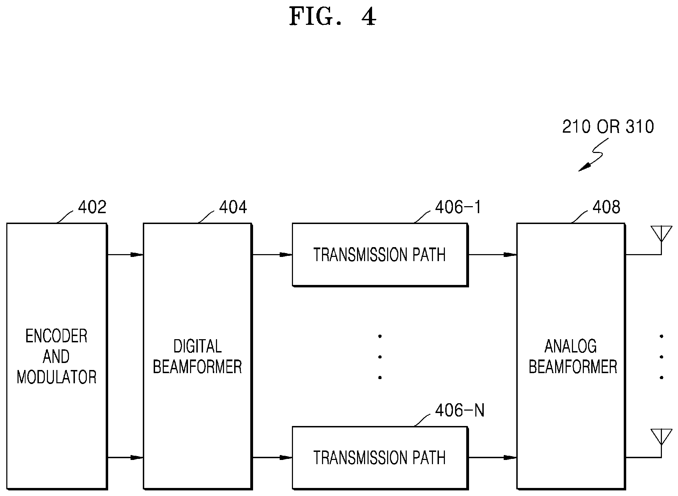

FIG. 4 illustrates a configuration of a communicator in a wireless communication system, according to an embodiment of the present disclosure.

FIG. 4 illustrates an example of a detailed configuration of the wireless communicator 210 of FIG. 2 or the communicator 310 of FIG. 3. In detail, FIG. 4 illustrates components for performing beamforming, as a part of the wireless communicator 210 of FIG. 2 or the communicator 310 of FIG. 3.

Referring to FIG. 4, the wireless communicator 210 or the communicator 310 includes an encoder and modulator 402, a digital beamformer 404, a plurality of transmission paths 406-1 to 406-N, and an analog beamformer 408.

The encoder and modulator 402 performs channel encoding. For the channel encoding, at least one of a low density parity check (LDPC) code, a convolution code, or a polar code may be used. The encoder and modulator 402 generates modulated symbols by performing constellation mapping.

The digital beamformer 404 performs beamforming on a digital signal (e.g., modulated symbols). To this end, the digital beamformer 404 multiplies the modulated symbols by beamforming weights. Here, the beamforming weights are used to change a magnitude and phase of a signal, and may be referred to as a precoding matrix, a precoder or the like. The digital beamformer 404 outputs modulated symbols that are digitally-beamformed to the plurality of transmission paths 406-1 to 406-N. Here, according to a multiple input multiple output (MIMO) transmission technique, the modulated symbols may be multiplexed or the same modulated symbols may be provided to the plurality of transmission paths 406-1 to 406-N.

The plurality of transmission paths 406-1 to 406-N convert the digitally beamformed digital signals into analog signals. To this end, each of the plurality of transmission paths 406-1 to 406-N may include an inverse fast Fourier transform (IFFT) operator, a cyclic prefix (CP) inserter, a DAC, and/or an up-converter. The CP inserter is provided for an orthogonal frequency division multiplexing (OFDM) scheme and may be excluded when different physical layer scheme (e.g., a filter bank multi-carrier (FBMC)) is applied. That is, the plurality of transmission paths 406-1 to 406-N provide independent signal processing processes for a plurality of streams generated via the digital beamforming. However, according to implementation methods, some components of the plurality of transmission paths 406-1 to 406-N may be commonly used.

The analog beamformer 408 performs beamforming on analog signals. To this end, the digital beamformer 404 multiples the analog signals by beamforming weights. Here, the beamforming weights are used to change a magnitude and phase of a signal. In detail, the analog beamformer 408 may be variously configured, based on connection structures between the plurality of transmission paths 406-1 to 406-N and antennas. For example, each of the plurality of transmission paths 406-1 to 406-N may be connected to one antenna array. In another example, the plurality of transmission paths 406-1 to 406-N may be connected to one antenna array. In another example, the plurality of transmission paths 406-1 to 406-N may be adaptively connected to one antenna array or at least two antenna arrays.

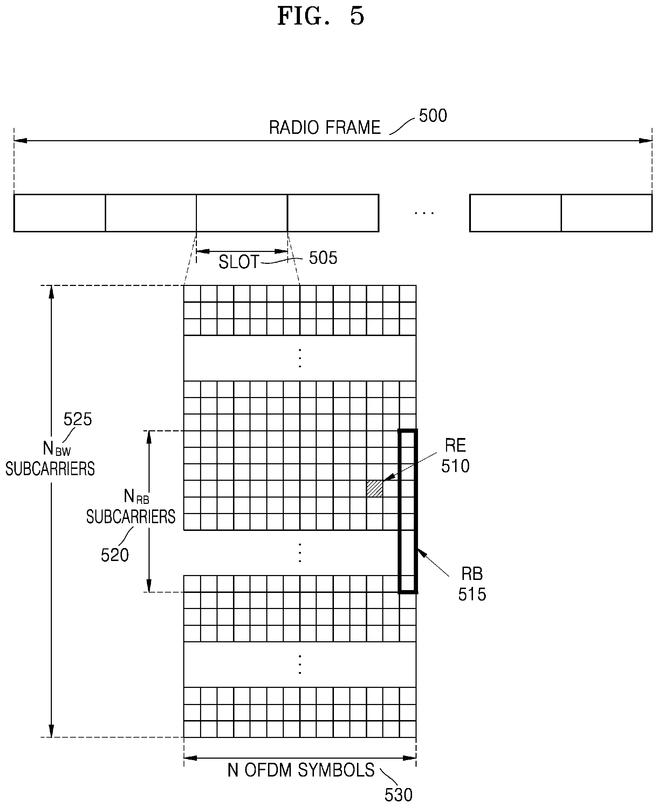

FIG. 5 illustrates a structure of radio time-frequency resources of a wireless communication system, according to an embodiment of the present disclosure.

Referring to FIG. 5, in a radio resource domain, a horizontal axis represents a time domain and a vertical axis represents a frequency domain. A minimum transmission unit in the time domain is an OFDM symbol or discrete Fourier transform spread OFDM (DFT-S-OFDM) symbol, and N_{symb} OFDM or DFT-S-OFDM symbols 530 are included in one slot 505. Unlike a slot, in an NR system, a length of a subframe may be defined as 1.0 ms, and a length of a radio frame 500 may be defined as 10 ms. A minimum transmission unit in the frequency domain is a subcarrier, and a bandwidth of an entire system transmission band may include a total of N_{BW} subcarriers 525. Specific numerical values such as N_{symb} and N_{BW} may vary according to a system.

A basic resource unit in the time-frequency domain may be a resource element (RE) 510, and the RE 510 may be represented by an OFDM symbol index or DFT-S-OFDM symbol index and a subcarrier index. A resource block (RB) 515 may be defined as N_{RB} consecutive subcarriers 520 in the frequency domain. In general, a minimum transmission unit of data is an RB, and in the NR system, N_{symb} = 14 and N_{RB} = 12 in general.

The structure of the radio time-frequency resources as shown in FIG. 5 is applied to a Uu interface. Also, the structure of the radio time-frequency resources as shown in FIG. 5 may also be applied to a sidelink.

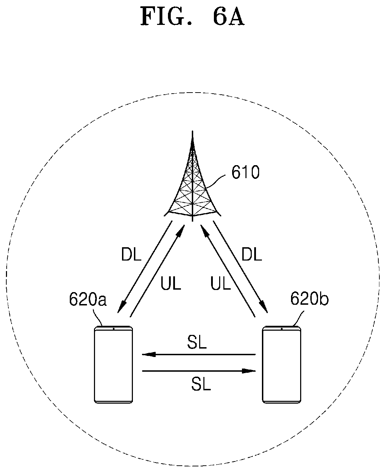

FIG. 6A shows a scenario for sidelink communication, according to an embodiment of the present disclosure.

FIG. 6A shows an in-coverage scenario in which sidelink UEs 620a and 620b are located in coverage of a base station 610. The sidelink UEs 620a and 620b may receive data and control information from the base station 610 through a downlink (DL), or may transmit data and control information to the base station through an uplink (UL). In this case, the data and control information may be data and control information for sidelink communication, or data and control information for general cellular communication other than sidelink communication. Also, in FIG. 6A, the sidelink UEs 620a and 620b may transmit and receive data and control information for sidelink communication through a sidelink.

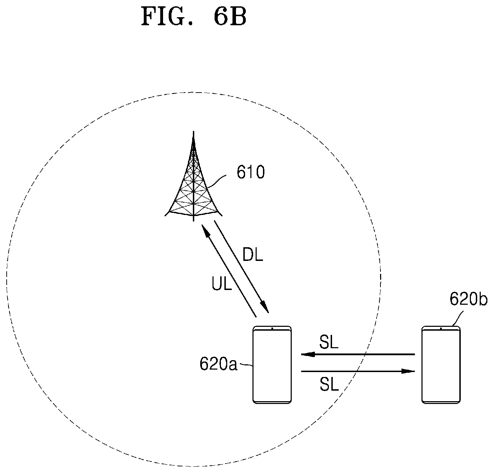

FIG. 6B shows a scenario for sidelink communication, according to an embodiment of the present disclosure.

FIG. 6B shows a partial coverage scenario in which, from among the sidelink UEs, the first UE 620a is located in the coverage of the base station 610 and the second UE 620b is located out of the coverage of the base station 610. The first UE 620a located in the coverage of the base station 610 may receive data and control information from the base station 610 through a downlink or may transmit data and control information to the base station 610 through an uplink. The second UE 620b located out of the coverage of the base station 610 may not receive data and control information from the base station 610 through a downlink and may not transmit data and control information to the base station 610 through an uplink. The second UE 620b may transmit and receive data and control information for sidelink communication through a sidelink.

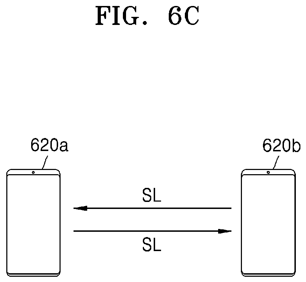

FIG. 6C shows a scenario for sidelink communication, according to an embodiment of the present disclosure.

Referring to FIG. 6C, the sidelink UEs (e.g., the first UE 620a and the second UE 620b) are located out of the coverage of the base station. Accordingly, the first UE 620a and the second UE 620b may not receive data and control information from the base station through a downlink, and may not transmit data and control information to the base station through an uplink. The first UE 620a and the second UE 620b may transmit and receive data and control information for sidelink communication through a sidelink.

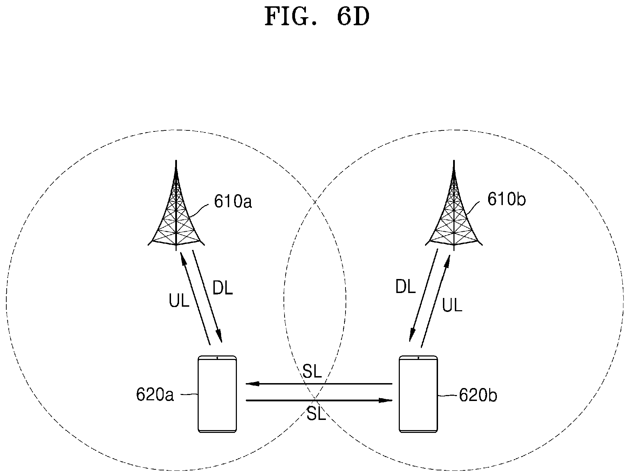

FIG. 6D shows a scenario for sidelink communication, according to an embodiment of the present disclosure.

Referring to FIG. 6D, the first UE 620a and the second UE 620b that perform sidelink communication may perform inter-cell sidelink communication while being connected to different base stations (e.g., a first base station 610a and a second base station 610b) (e.g., an RRC connected state) or camping on the different stations (e.g., an RRC disconnected state, i.e., an RRC idle state). In this case, the first UE 620a may be a sidelink transmission UE, and the second UE 620b may be a sidelink reception UE. Alternatively, the first UE 620a may be a sidelink reception UE, and the second UE 620b may be a sidelink transmission UE. The first UE 620a may receive a sidelink dedicated system information block (SIB) from the base station 610a to which the first UE 620a is connected (or on which the first UE 620a camps), and the second UE 620b may receive a sidelink dedicated SIB from the base station 620b to which the second UE 620b is connected (or on which the second UE 620b camps). In this case, information of the sidelink dedicated SIB received by the first UE 620a and information of the sidelink dedicated SIB received by the second UE 620b may be different from each other. Accordingly, to perform sidelink communication between UEs located in different cells, the information needs to be united.

Although a sidelink system including two UEs (e.g., the first UE 610a and the second UE 620b) has been described in FIGS. 6A through 6D for convenience, the present disclosure is not limited thereto and may be applied to a sidelink system in which two or more UEs are included. Also, an uplink and a downlink between the base stations 610, 610a, and 610b and the sidelink UEs 620a and 620b may be referred to as a Uu interface, and a sidelink between the sidelink UEs may be referred to as a PC-5 interface. In the following description, an uplink or a downlink and a Uu interface may be interchangeably used, and a sidelink and PC-5 may be interchangeably used.

In the present disclosure, a UE may refer to a vehicle that supports vehicle-to-vehicle (V2V) communication, a vehicle or a pedestrian's handset (e.g., a smartphone) that supports vehicle-to-pedestrian (V2P) communication, a vehicle that supports vehicle-to-network (V2N) communication, or a vehicle that supports vehicle-to-infrastructure (V2I) communication. Also, in the present disclosure, a UE may refer to a road side unit (RSU) having embedded therein UE functions, a RSU having embedded therein base station functions, or a RSU having embedded therein some base station functions and some UE functions.

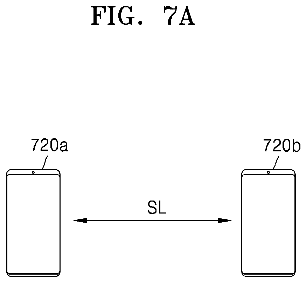

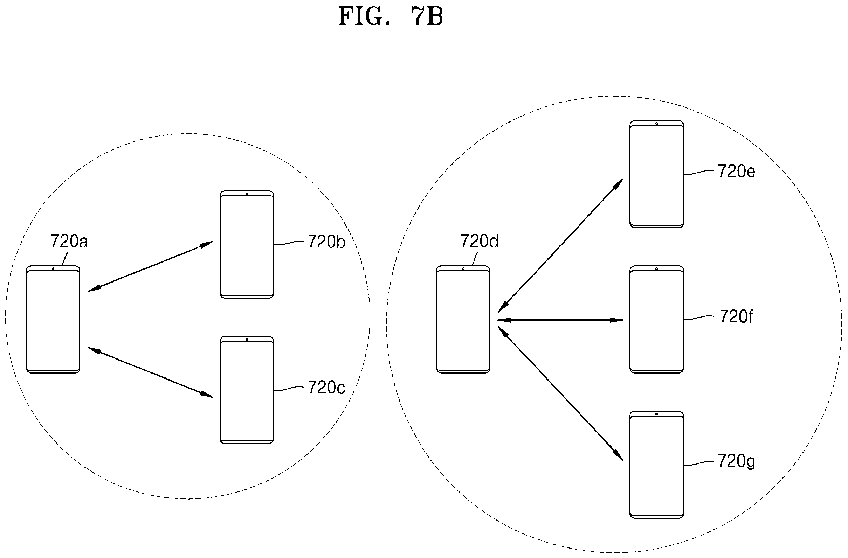

FIGS. 7A and 7B are views for describing a transmission method of sidelink communication, according to an embodiment of the present disclosure.

In detail, FIG. 7A illustrates a unicast method, and FIG. 7B illustrates a groupcast method.

Referring to FIG. 7A, a transmission UE 720a and a reception UE 720b may perform one-to-one communication. A transmission method as shown in FIG. 7A may be referred to as unicast communication. Referring to FIG. 7B, a transmission UE 720a or 720d and reception UEs 720b, 720c, 720e, 720f, and 720g may perform one-to-many communication. A transmission method as shown in FIG. 7B may be referred to as groupcast or multicast communication. In FIG. 7B, the first UE 720a, the second UE 720b, and the third UE 720c perform groupcast communication by forming one group, and the fourth UE 720d, the fifth UE 720e, the sixth UE 720f, and the eighth UE 720g perform groupcast communication by forming another group. Each UE may perform groupcast communication only within a group to which the each UE belongs, and may perform unicast, groupcast, or broadcast communication with at least one UE belonging to different groups. Although two groups are illustrated in FIG. 7B for convenience of explanation, the present disclosure is not limited thereto and may be applied even when a larger number of groups are formed.

Although not shown in FIG. 7A or 7B, sidelink UEs may perform broadcast communication. Broadcast communication refers to a method by which all sidelink UEs receive data and control information transmitted by a sidelink transmission UE through a sidelink. For example, in FIG. 7B, when the first UE 720a is a transmission UE, the remaining UEs 720b, 720c, 720d, 720e, 720f, and 720g may receive data and control information transmitted by the first UE 720a.

Sidelink unicast communication, groupcast communication, and/or broadcast communication may be supported in an in-coverage scenario, a partial-coverage scenario, or an out-of-coverage scenario.

Unlike an LTE sidelink, in the case of an NR sidelink, support of a transmission type in which a vehicle UE transmits data to only one specific UE via unicast and support of a transmission type in which a vehicle UE transmits data to specific multiple UEs via groupcast may be considered. For example, when considering a service scenario, such as platooning, which is a technology of connecting two or more vehicles via a network to drive them as a cluster, such unicast and groupcast technologies may be useful. Specifically, a leader UE of a group connected by platooning may use unicast communication to control a specific UE of the group, and may use groupcast communication to simultaneously control specific multiple UEs of the group.

Resource allocation in a V2X system may be performed as follows.

### (1) Mode 1 Resource Allocation

Scheduled resource allocation may be a method by which a base station allocates resources to be used for sidelink transmission to UEs in an RRC-connected mode through a dedicated scheduling scheme. The scheduled resource allocation method may be effective for interference management and resource pool management (dynamic allocation and/or semi-persistent transmission) because the base station may manage sidelink resources. When there is data to be transmitted to other UE(s), a UE in the RRC-connected mode may transmit information notifying the base station that there is data to be transmitted to other UE(s) by using an RRC message or a MAC control element (CE). For example, the RRC message transmitted by the UE to the base station may be a sidelink UE information (SidelinkUElnformation) or UE assistance information (UEAssistancelnformation) message, and the MAC CE may be a buffer status report (BSR) MAC CE, a scheduling request (SR), or the like including at least one of an indicator indicating a BSR for V2X communication and information about the size of data buffered for sidelink communication.

### (2) Mode 2 Resource Allocation

UE autonomous resource selection may be a method by which a UE is provided with a sidelink transmission/reception resource pool for V2X through system information or an RRC message (e.g., an RRC reconfiguration message (RRCReconfiguration) or a PC5-RRC message) and the UE selects a resource pool and a resource according to a set rule. The UE autonomous resource selection may correspond to one or more of the following resource allocation methods.
> UE autonomously selects sidelink resource for transmission.
> UE assists sidelink resource selection for other UEs.
> UE is configured with NR configured grant for sidelink transmission.
> UE schedules sidelink transmission of other UEs.
   - The resource selection method of the UE may include zone mapping, sensing-based resource selection, random selection, and/or the like.
   - In addition, when a UE exists in the coverage of a base station but may not perform resource allocation or resource selection in a scheduled resource allocation and/or UE autonomous resource selection mode, the UE may perform V2X sidelink communication through a pre-configured sidelink transmission/reception resource pool.
   - Also, when UEs for V2X communication are located outside the coverage of a base station, a UE may perform V2X sidelink communication through a pre-configured sidelink transmission/reception resource pool.

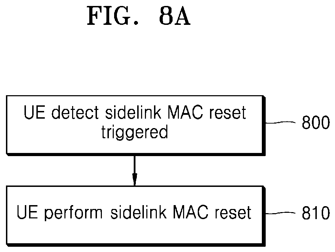

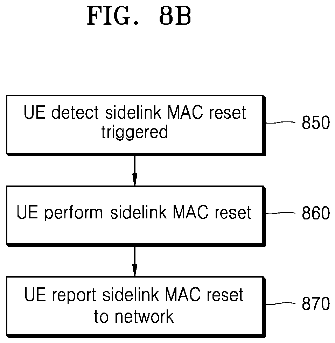

FIGS. 8A and 8B are diagrams illustrating an operation in which a UE processes a MAC reset, according to an embodiment of the present disclosure.

Referring to FIG. 8A, in operation 800, a UE may determine (or detect) that a MAC reset of a sidelink interface is triggered. An event in which a MAC reset of a sidelink interface is triggered may include at least one of (1) through (4) of Table 1, or a combination thereof. In another embodiment, an event in which a MAC reset of a sidelink interface may include an event in which a MAC reset of a Uu interface is triggered as shown in Table 2. That is, an event in which a UE also performs a MAC reset of a sidelink interface when performing a MAC reset of a Uu interface may include at least one of (1) through (9) of Table 2, e.g. RRC state transition of the UE.

In operation 810, the UE may perform a MAC reset operation of the sidelink interface. The MAC reset operation of the sidelink interface performed by the UE in operation 810 is as shown in Table 4.

**[Table 1] Example in which UE performs MAC reset of sidelink interface**

| |
|---|
| (1) UE state transition (RRC state transition) |
| (2) sidelink configuration information is changed (e.g., sidelink configuration information provided in system information for sidelink (SIB_SL) or dedicated RRC is changed) |
| (3) SL logical channel ID is changed |
| (4) SL PDCP re-establishment procedure is performed (e.g., SL PDCP re-establishment is triggered by sidelink key refresh, or sidelink reset configuration is configured) |

**[Table 2] Example in which UE performs MAC reset of Uu interface**

| |
|---|
| (1) T300 expiry |
| (2) Abortion of RRC connection establishment |
| (3) T304 expiry (Reconfiguration with sync Failure) |
| (4) RRC connection re-establishment |
| (5) RRC connection release |
| (6) UE actions upon going to RRC_IDLE |
| (7) Reception of the RRCReject by the UE |
| (8) Successful completion of the mobility from NR (handover completion) |
| (9) cell reselection occurs while waiting for acknowledgement for on demand system information request |

The example of Table 2, when the UE performs a sidelink-based operation, may be used as an event in which the UE performs a sidelink MAC reset or an event in which the UE cancel and/or clear sidelink mode 1 configuration.

The sidelink mode 1 configuration corresponds to sidelink configuration information configured for the UE to operate sidelink mode 1 resource allocation, and may include at least one of information of Table 3 or a combination thereof.

**[Table 3]**

| |
|---|
| • SR (scheduling request) configuration. |
| • SR configuration for SL-CSI report |
| • Sidelink Buffer status report (SL-BSR) configuration |
| • Sidelink Configured Grant (SL CG) confirmation |
| • HARQ configuration during operation of mode 1 resource allocation |
| • Sidelink timer or sidelink constants (e.g., SL-DCI-ToSL-Transition, periodicBSR- |
| timer, retxBSR-timer, or logicalChannelSR-DelayTimer) |

**[Table 4]**

| Sidelink MAC reset operation | |
|---|---|
| | If a reset of the MAC entity is requested by upper layers, the MAC entity shall: |
| | 1> initialize SBj for each logical channel to zero; |
| | 1> stop (if running) all timers; // including SL-DCI-ToSL-Transition, periodicBSR-timer, retxBSR-timer, logicalChannelSR-DelayTimer |
| | 1> set the NDIs for sidelink HARQ processes to the value 0; |
| | 1> cancel, if any, triggered Scheduling Request procedure for mode 1; |
| | 1> cancel, if any, triggered Sidelink Buffer Status Reporting procedure for mode 1; |
| | 1> cancel, if any, triggered Sidelink Configured Grant (SL CG) confirmation for mode 1; |
| | 1> cancel, if any, triggered sidelink TX resource (re-)selection procedures, |
| | 1> flush the soft buffers for sidelink HARQ processes; |

Referring to FIG. 8B, in operation 850, a UE may determine (or detect) that a MAC reset of a sidelink interface is triggered based on an event of Table 1 or Table 2. In operation 860, the UE may perform a MAC reset operation of the sidelink interface according to Table 4. When the UE is performing a sidelink operation or a sidelink mode 1-baed operation in an RRC_CONNECTED state, in operation 870, the UE may report a sidelink MAC reset to a network. The network may use the sidelink MAC reset report of the UE to operate sidelink configuration information or sidelink mode 1 operation-related configuration information for the UE (e.g., at least one of SL BSR configuration and timer, SL SR configuration and timer, or SL hybrid automatic request (HARQ) configuration and timer). In the embodiment of FIGS. 8A and 8B, an operation in which a UE performing sidelink unicast-based data transmission/reception performs a sidelink MAC reset will be described as an example assuming that sidelink reset configuration is configured. When a UE receives from a counterpart UE a RRCReconfigurationSidelink message including sidelink reset configuration or when a UE transmitting a RRCReconfigurationSidelink message including sidelink reset configuration receives a RRCReconfigurationCompleteSidelink message that is a response message from a counterpart UE, the UE may perform the following operation.
1> The UE may perform the sidelink reset configuration procedure as below:
   2> release/clear all current sidelink radio configuration of this destination;
   2> release the sidelink DRBs of this destination;
   2> reset sidelink MAC (operation of Table 4).

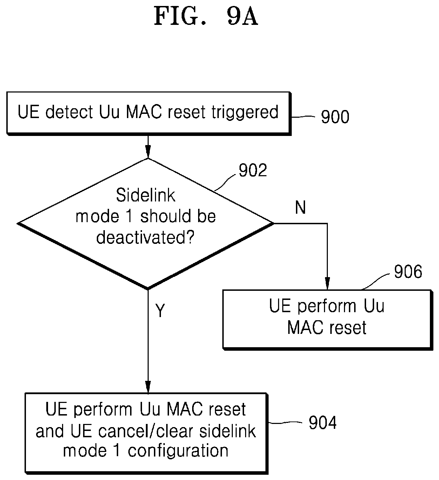

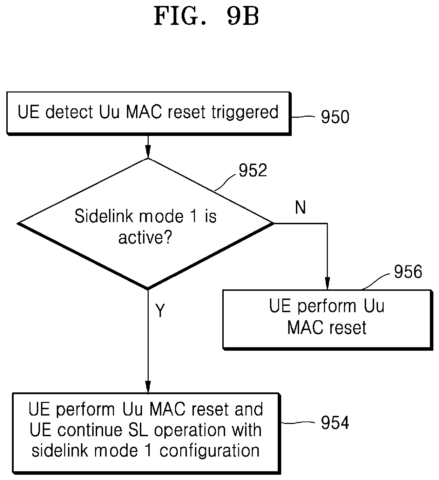

FIGS. 9A and 9B are diagrams illustrating an operation in which a UE processes a MAC reset, according to an embodiment of the present disclosure.

Referring to FIG. 9A, in operation 900, a UE may determine (or detect) whether a MAC reset of a Uu interface occurs (or is triggered). In operation 902, the UE that is performing a sidelink mode 1 operation may determine whether to stop the sidelink mode 1 operation. When it is determined in operation 902 that the sidelink mode 1 operation should be stopped, in operation 904, the UE may perform a MAC reset operation of the Uu interface, may cancel the sidelink mode 1 operation that is being performed (or triggered), may stop a timer in operation for the sidelink mode 1 operation, and may perform an operation of initializing parameters used in the sidelink mode 1 operation. Configuration information, the timer, and/or the parameters related to the sidelink mode 1 operation may include at least one of information of Table 3 or a combination thereof. When it is determined in operation 902 that the sidelink mode 1 operation does not need to be stopped, in operation 906, the UE may perform the MAC reset operation of the Uu interface.

Referring to FIG. 9B, in operation 950, a UE may determine (or detect) whether a MAC reset of a Uu interface occurs (or is triggered). In operation 952, the UE may determine whether a sidelink mode 1 operation is being performed. When it is determined in operation 952 that the sidelink mode 1 operation is being performed, in operation 954, the UE may perform a MAC reset operation of the Uu interface, and may continuously perform the sidelink mode 1 operation. In operation 954, the UE may maintain configuration information, timer, and/or parameters related to the sidelink mode 1 operation, and the information maintained by the UE for the sidelink mode 1 operation may include at least one of information of Table 3 or a combination thereof. When it is determined in operation 952 that the UE does not perform the sidelink mode 1 operation, in operation 956, the UE may perform the MAC reset operation of the Uu interface.

In the embodiment of FIG. 9B, the MAC reset operation of the Uu interface performed by a UE may be as shown in Table 5.

**[Table 5]**

| Uu MAC reset operation | |
|---|---|
| | If a reset of the MAC entity is requested by upper layers, the MAC entity shall: |
| | 1> initialize Bj for each logical channel to zero; |
| | 1> stop (if running) all timers (except SL timers for PC5-RRC or all SL related timers); |
| | 1> set the NDIs for all uplink HARQ processes to the value 0; |
| | 1> cancel, if any, triggered Scheduling Request procedure; (except SR triggered for |
| | PC5-RRC or SR triggered for NR SL communication) 1> cancel, if any, triggered Buffer Status Reporting procedure; |
| | 1> cancel, if any, triggered Sidelink Buffer Status Reporting procedure; (except BSR for PC5-RRC or BSR triggered for NR SL communication) |
| | 1> flush the soft buffers for all DL HARQ processes; |
| | 1> for each DL HARQ process, consider the next received transmission for a TB as the very first transmission; |
| | 1> release, if any, Temporary C-RNTI; |

As in the embodiment of FIGS. 9A and 9B, an event in which a UE performs a MAC reset of a Uu interface may include at least one of (1) through (9) of Table 2 or a combination thereof, including a case where the UE successfully performs handover to a target network.

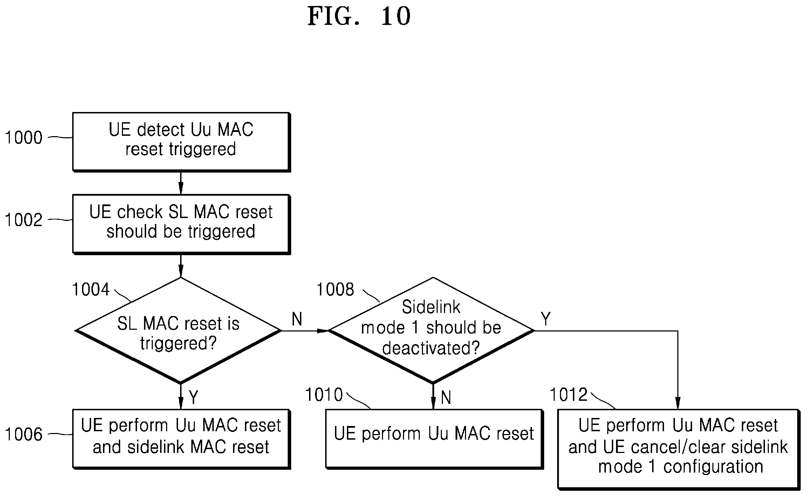

FIG. 10 is a diagram illustrating an operation in which a UE processes a MAC reset, according to an embodiment of the present disclosure.

Referring to FIG. 10, in operation 1000, a UE may determine whether a MAC reset of a Uu interface occurs (or is triggered). In operation 1002, the UE may determine whether a MAC reset of a sidelink interface should occur (or be triggered) due to the MAC reset of the Uu interface in operation 1000. In operation 1004, the UE may determine whether the MAC reset of the sidelink interface is triggered, and when it is determined that the MAC reset of the sidelink interface is triggered, the UE may proceed to operation 1006. In operation 1006, the UE may perform both a Uu interface MAC reset operation and a sidelink MAC reset operation. In this case, the UE may perform operations of Table 5 and Table 4.

Alternatively, the UE may determine in operation 1004 that the sidelink MAC reset operation is not triggered. In this case, in operation 1008, when a sidelink mode 1 operation is being performed, the UE may determine whether the sidelink mode 1 operation should be stopped due to the MAC reset of the Uu interface. When it is determined in operation 1008 that the sidelink mode 1 operation may be continuously performed, the UE may proceed to operation 1010 and may perform the Uu interface MAC reset operation. In this case, the UE may maintain configuration information, timer, and/or parameters for the sidelink mode 1 operation and may perform an operation of Table 5 regardless of the Uu interface MAC reset operation. Alternatively, when it is determined in operation 1008 that the sidelink mode 1 operation should be stopped, in this case, the UE may proceed to operation 1012, may perform the Uu interface MAC reset operation and may perform an operation of cancelling, stopping, and/or initializing the configuration information, timer, and/or parameters for performing the sidelink mode 1.

In another example of FIG. 10, the UE performing the sidelink MAC reset in operation 1006, may report a sidelink MAC reset operation to a network.

A UE having performed a sidelink MAC reset according to an embodiment of FIGS. 8A, 8B, 9A, 9B, and 10 may perform sidelink radio bearer (SLRB) configuration/reconfiguration and SLRB MAC configuration/reconfiguration for an SLRB of corresponding PC5 RRC connection (or corresponding sidelink destination). The UE may include a transmission UE and a reception UE. The SLRB and SLRB MAC configuration/reconfiguration follows configuration information indicated in Sidelink RB reconfiguration or Sidelink RRC reconfiguration. The Sidelink RB reconfiguration and Sidelink RRC reconfiguration may be obtained by at least one of RRC dedicated signaling, SIB, preconfiguration, SidelinkRRC signaling, and default RB configuration or a combination thereof. The UE may perform packet transmission/reception by using the reconfigured SLRB.

An operation of a UE for processing a MAC reset according to an embodiment of FIG. 8A, 9A, 9B, and 10 may be applied to at least one of sidelink unicast, sidelink groupcast, or sidelink broadcast or a combination thereof.

According to various embodiments of the present disclosure, (1) the UE may stop a sidelink mode 1 that is being performed and may perform a sidelink mode 2, and (2) the UE may stop the sidelink mode 2 that is being performed and may perform the sidelink mode 1

An operation of the UE when the sidelink mode 1 that is being performed is stopped and the sidelink mode 2 is performed (in the case (1)) is as shown in Table 6.

**[Table 6]**

| |
|---|
| 1> stop periodicBSR-Timer (if running); |
| 1> stop retxBSR-Timer (if running); |
| 1> stop logicalChannelSR-DelayTimer (if running) |
| 1> cancel, if any, triggered Scheduling Request procedure for mode 1; |
| 1> cancel, if any, triggered Sidelink Buffer Status Reporting procedure for mode 1; |
| 1> cancel, if any, triggered sidelink configured grant confirmation for mode 1; |

An operation of the UE when the sidelink mode 2 that is being performed is stopped and the sidelink mode 1 is performed (in the case (2)) is as shown in Table 7.

**[Table 7]**

| |
|---|
| 1> cancel, if any, triggered sidelink TX resource (re-)selection procedures, |
| 1> stop sidelink TX resource (re-)selection related Timer (if running); |
| 1> stop sidelink mode 2 related Timer (if running); |

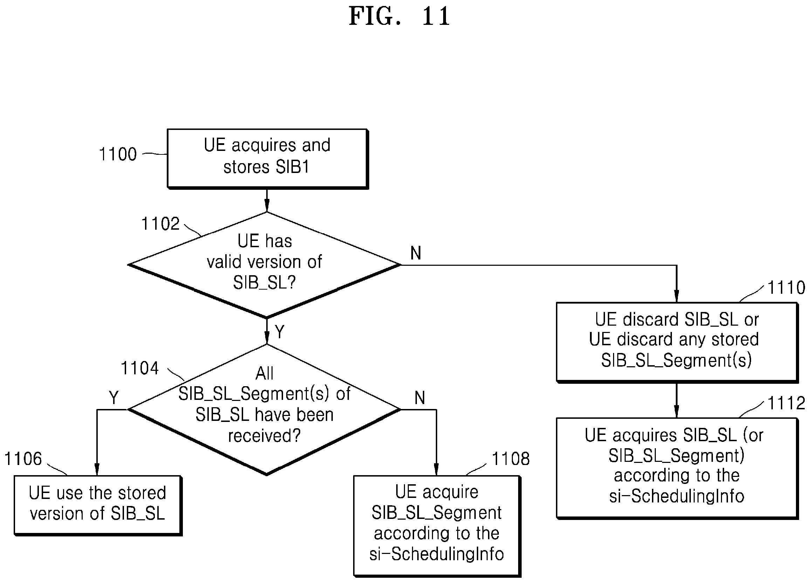

According to various embodiments of the present disclosure, an operation in which a UE processes system information (SIB_SL or SIB_sidelink) including sidelink configuration information is as shown in an embodiment of FIG. 11.

The system information (SIB_SL) including the sidelink configuration information may be segmented, transmitted from a base station, and received by the UE. When the SIB_SL is segmented, when it is determined that all segments for the same SIB_SL are received, the UE may process information of the SIB_SL. The UE may perform a segment reception operation of the same SIB_SL until all segments for the same SIB_SL are received. When it is determined that valueTag is configured for the SIB_SL, the UE may determine whether the SIB_SL is changed based on information of valueTag of the SIB_SL included in an SIB1 message. When it is determined that valueTag of the SIB_SL is changed while the UE receives and stores segments of the SIB_SL, that is, while not receiving all of the segments of the SIB_SL, the UE may discard segments included in the SIB_SL of the previous valueTag and may perform an operation of receiving segments included in SIB_SL of the changed valueTag or unsegmented SIB_SL.

FIG. 11 is a diagram illustrating an operation in which a UE processes a sidelink broadcast message, according to an embodiment of the present disclosure.

Referring to FIG. 11, in operation 1100, a UE may obtain and store an SIB1 message. Operation 1100 may be performed when a system information (SI) message is first obtained or SI update indication indicating that a system broadcast message is changed is obtained. The SIB1 message may include at least one of scheduling information (si-Schedulinglnfo) of another SIB message or validity information (valueTag) of another SIB message, or a combination thereof. In operation 1102, the UE may determine validity of a SIB message (e.g., SIB_SL) stored in the UE based on validity information of the SIB1.

When it is determined in operation 1102 that the SIB_SL message stored in the UE is valid, in operation 1104, the UE may determine whether SIB_SL_Segment is stored or the entire SIB_SL is stored to obtain the entire SIB_SL. When it is determined in operation 1104 that the UE obtains and stores the entire SIB_SL, in operation 1106, the UE may determine that the stored SIB_SL may be continuously used. It may be determined in operation 1104 that the UE receives and stores SIB_SL_Segment and does not obtain the entire SIB_SL yet. In this case, in operation 1108, the UE may perform an operation of obtaining and/or storing SIB_SL_Segment corresponding to the SIB_SL based on SIB message scheduling information (information of si-Schedulinglnfo). When it is determined that the obtained SIB_SL_Segment is a last segment, the UE may obtain the entire SIB_SL by combining SIB_SL_Segments that are stored.

When it is determined in operation 1102 that the SIB_SL stored in the UE is not valid, in operation 1110, the UE may delete the SIB_SL that is determined to be invalid. In this case, when the UE stores the entire SIB_SL, the UE may delete the entire SIB_SL. When the UE does not obtain the entire SIB_SL and stores SIB_SL_Segment that is a segment of the SIB_SL, the UE may determine that SIB_SL_Segment does not correspond to the SIB_SL and may delete SIB_SL_Segment. In operation 1112, the UE may perform a procedure of obtaining SIB_SL based on SIB message scheduling information (information of si-Schedulinglnfo). SIB_SL may be obtained as entire SIB_SL without being segmented, or may be obtained as SIB_SL_Segment corresponding to a segment of the SIB_SL. When the SIB_SL is obtained as SIB_SL_Segment, the UE may store the obtained SIB_SL_Segment and may continuously proceed to operation 1100.

| |
|---|
| Actions upon reception of SIB1 |
| Upon Receiving the SIB1 the UE shall: |
| 1> store the acquired SIB1; |
| 1> if UE has a stored valid version of SIB_SL (or SIB_SL_Segment of SIB_SL) based on valueTag of SIB_SL |
| 2> Use the stored version of the required SIB_SL or acquire the SI message(s) corresponding to the requested SIB_SL as defined in sub-clause A if all SIB_SL_Segment(s) of SIB_SL are not received (if SIB_SL_Segment(s) are stored); |
| 1> else if UE has not stored a valid version of SIB_SL (or SIB_SL_Segment of SIB_SL) based on valueTag of SIB_SL |
| 2> for the SI message(s) that, according to the si-Schedulinglnfo, contain at least required SIB_SL and for which si-BroadcastStatus is set to broadcasting: |
| 3> discard (if any) stored SIB_SL_Segment(s) of SIB_SL; |
| 3> acquire the SI message(s) corresponding to the requested SIB_SL as defined in sub-clause A; |
| 3> for the SI message(s) that, according to the si-Schedulinglnfo, contain at least required SIB_SL and for which si-BroadcastStatus is set to notBroadcasting: |
| 4> trigger a request to acquire the required SIB_SL; |

| |
|---|
| Subclause A: |
| Actions upon reception of SIB_SL |
| Upon receiving the SIB_SL the UE shall: |
| 1> if all segments of a SIB_SL have been received: |
| 2> assemble the SIB_SL from the received SIB_SL_Segment(s); |
| 2> stop reception of SIB_SL; |
| 1> else: |
| 2> store the received SIB_SL_Segment; |
| 2> continue reception of SIB_SL; |
| The UE should discard any stored SIB_SL_Segment for SIB_SL if the complete SIB_SL message has not been assembled within a period of 3 hours. |

Methods according to the claims of the present disclosure or the embodiments described in the specification may be implemented in hardware, software, or a combination of hardware and software.

When the methods are implemented in software, a computer-readable storage medium storing one or more programs (software modules) may be provided. The one or more programs stored in the computer-readable storage medium are configured to be executed by one or more processors in an electronic device. The one or more programs include instructions for allowing the electronic device to execute the methods according to the claims or the embodiments of the present disclosure.

The programs (e.g., software modules or software) may be stored in a non-volatile memory including a random-access memory (RAM) or a flash memory, a read-only memory (ROM), an electrically erasable programmable read-only memory (EEPROM), a magnetic disc storage device, a compact disc-ROM (CD-ROM), a digital versatile disc (DVD), another optical storage device, or a magnetic cassette. Alternatively, the programs may be stored in a memory including any combination of some or all of the above storage media. Also, a plurality of such constituent memories may be provided.

Also, the programs may be stored in an attachable storage device that is accessible through a communication network, such as the Internet, an intranet, a local area network (LAN), a wide LAN (WLAN), or a storage area network (SAN), or a combination thereof. Such a storage device may be connected through an external port to an apparatus for performing an embodiment of the present disclosure. Also, a separate storage device on a communication network may be connected to the apparatus for performing an embodiment of the present disclosure.

In detailed embodiments of the present disclosure, components included in the present disclosure have been expressed as singular or plural according to the detailed embodiments of the present disclosure. However, the singular or plural form is selected appropriately for a condition provided for convenience of explanation, and the present disclosure is not limited to the singular or plural form. An element expressed in a singular form may include a plurality of elements and elements expressed in a plural form may include a single element.

## Claims

1. A method of a first terminal (720a) for a sidelink communication in a wireless communication system, the method comprising:
receiving (800, 850), from a second terminal (720b), a sidelink radio resource control, RRC, reconfiguration message comprising sidelink reset configuration information; and
based on the sidelink RRC reconfiguration message comprising the sidelink reset configuration information:
releasing a sidelink radio bearer for a PC5-RRC connection with the second terminal (720b); and
resetting (810, 860) a medium access control, MAC, entity of a sidelink for the PC5-RRC connection with the second terminal (720b).

2. The method of claim 1, wherein the resetting of the MAC entity of the sidelink for the PC5-RRC connection with the second terminal comprises at least one of:
emptying a soft buffer of a sidelink procedure related to the PC5-RRC connection;
cancelling a triggered scheduling request procedure related to the PC5-RRC connection;
cancelling a triggered sidelink buffer status report procedure related to the PC5-RRC connection;
stopping a timer related to the PC5-RRC connection; or
initializing a parameter for a sidelink buffer for each logical channel related to the PC5-RRC connection.

3. The method of claim 1, further comprising configuring a new sidelink radio bearer for the PC5-RRC connection with the second terminal based on sidelink configuration information.

4. The method of claim 3, wherein the sidelink configuration information is included in at least one of received sidelink dedicated configuration information, a system information block, SIB, or sidelink pre-configuration information.

5. The method of claim 1, wherein when a sidelink resource allocation mode 1 is configured for the first terminal and a reset of a MAC entity of a Uu interface is triggered, the method further comprises at least one of:
initializing a parameter related to the sidelink resource allocation mode 1;
cancelling a procedure related to the sidelink resource allocation mode 1; or
stopping a timer related to the sidelink resource allocation mode 1.

6. The method of claim 5, wherein the parameter related to the sidelink resource allocation mode 1 comprises a parameter for a hybrid automatic repeat request, HARQ, configuration related to the sidelink resource allocation mode 1.

7. The method of claim 5, wherein the procedure related to the sidelink resource allocation mode 1 comprises at least one of a scheduling request procedure, a sidelink buffer status report procedure or a sidelink configured grant confirmation.

8. A first terminal (720a) for a sidelink communication in a wireless communication system, the first terminal (720a) comprising:
a transceiver (310); and
at least one processor (330) coupled with the transceiver (310) and configured to:
receive (800, 850), from a second terminal (720b), a sidelink radio resource control, RRC, reconfiguration message comprising sidelink reset configuration information, and
based on the sidelink RRC reconfiguration message comprising the sidelink reset configuration information:
release a sidelink radio bearer for a PC5-RRC connection with the second terminal (720b), and
reset (810, 860) a medium access control, MAC, entity of a sidelink for the PC5-RRC connection with the second terminal (720b).

9. The first terminal of claim 8, wherein the resetting of the MAC entity of the sidelink for the PC5-RRC connection with the second terminal comprises at least one of:
emptying a soft buffer of a sidelink procedure related to the PC5-RRC connection;
cancelling a triggered scheduling request procedure related to the PC5-RRC connection;
cancelling a triggered sidelink buffer status report procedure related to the PC5-RRC connection;
stopping a timer related to the PC5-RRC connection; or
initializing a parameter for a sidelink buffer for each logical channel related to the PC5-RRC connection.

10. The first terminal of claim 8, wherein the at least one processor is further configured to configure a new sidelink radio bearer for the PC5-RRC connection with the second terminal based on sidelink configuration information.

11. The first terminal of claim 10, wherein the sidelink configuration information is included in at least one of received sidelink dedicated configuration information, a system information block, SIB, or sidelink pre-configuration information.

12. The first terminal of claim 8, wherein the at least one processor is further configured to, when a sidelink resource allocation mode 1 is configured for the first terminal and a reset of a MAC entity of a Uu interface is triggered, perform at least one of:
initializing a parameter related to the sidelink resource allocation mode 1,
cancelling a procedure related to the sidelink resource allocation mode 1, or
stopping a timer related to the sidelink resource allocation mode 1.

13. The first terminal of claim 12, wherein the parameter related to the sidelink resource allocation mode 1 comprises a parameter for a hybrid automatic repeat request, HARQ, configuration related to the sidelink resource allocation mode 1.

14. The first terminal of claim 12, wherein the procedure related to the sidelink resource allocation mode 1 comprises at least one of a scheduling request procedure, a sidelink buffer status report procedure or a sidelink configured grant confirmation.

## Patentansprüche

1. Verfahren eines ersten Endgeräts (720a) für eine Sidelink-Kommunikation in einem Drahtloskommunikationssystem, das Verfahren umfassend:
Empfangen (800, 850), von einem zweiten Endgerät (720b), einer Sidelink-Funkressourcensteuerungs-, RRC, -Rekonfigurationsnachricht, umfassend Sidelink-Rücksetzkonfigurationsinformationen; und
basierend auf der Sidelink-RRC-Rekonfigurationsnachricht, umfassend die Sidelink-Rücksetzkonfigurationsinformationen:
Freigeben eines Sidelink-Funkzugangsträgers für eine PC5-RRC-Verbindung mit dem zweiten Endgerät (720b); und
Rücksetzen (810, 860) einer Medienzugriffssteuerungs-, MAC, -Entität eines Sidelinks für die PC5-RRC-Verbindung mit dem zweiten Endgerät (720b).

2. Verfahren nach Anspruch 1, wobei das Rücksetzen der MAC-Entität des Sidelinks für die PC5-RRC-Verbindung mit dem zweiten Endgerät mindestens eines aus Folgendem umfasst:
Leeren eines Soft-Puffers eines Sidelink-Verfahrens, das auf die PC5-RRC-Verbindung bezogen ist;
Abbrechen eines ausgelösten Planungsanforderungsverfahrens, das auf die PC5-RRC-Verbindung bezogen ist;
Abbrechen eines ausgelösten Sidelink-Pufferstatusberichtverfahrens, das auf die PC5-RRC-Verbindung bezogen ist;
Stoppen eines Zeitgebers, der auf die PC5-RRC-Verbindung bezogen ist; oder
Initialisieren eines Parameters für einen Sidelink-Puffer für jeden logischen Kanal, der auf die PC5-RRC-Verbindung bezogen ist.

3. Verfahren nach Anspruch 1, ferner umfassend Konfigurieren eines neuen Sidelink-Funkzugangsträgers für die PC5-RRC-Verbindung mit dem zweiten Endgerät basierend auf Sidelink-Konfigurationsinformationen.

4. Verfahren nach Anspruch 3, wobei die Sidelink-Konfigurationsinformation enthalten ist in mindestens einem aus empfangenen dedizierten Sidelink-Konfigurationsinformationen, einem Systeminformationsblock, SIB, oder Sidelink-Vorkonfigurationsinformationen.

5. Verfahren nach Anspruch 1, wobei wenn ein Sidelink-Ressourcenallokationsmodus 1 für das erste Endgerät konfiguriert ist und eine Rücksetzung einer MAC-Entität einer Uu-Schnittstelle ausgelöst wird, das Verfahren ferner mindestens eines aus Folgendem umfasst:
Initialisieren eines auf den Sidelink-Ressourcenallokationsmodus 1 bezogenen Parameters;
Abbrechen eines auf den Sidelink-Ressourcenallokationsmodus 1 bezogenen Verfahrens; oder
Stoppen eines auf den Sidelink-Ressourcenallokationsmodus 1 bezogenen Zeitgebers.

6. Verfahren nach Anspruch 5, wobei der auf den Sidelink-Ressourcenallokationsmodus 1 bezogene Parameter einen Parameter für eine Konfiguration der hybriden automatischen Wiederholungsanforderung, HARQ, umfasst, die auf den Sidelink-Ressourcenallokationsmodus 1 bezogen ist.

7. Verfahren nach Anspruch 5, wobei das auf den Sidelink-Ressourcenallokationsmodus 1 bezogene Verfahren mindestens eines aus einem Planungsanforderungsverfahren, einem Sidelink-Pufferstatusberichtverfahren oder einer Sidelink-konfigurierten-Gewährung-Bestätigung umfasst.

8. Erstes Endgerät (720a) für eine Sidelink-Kommunikation in einem Drahtloskommunikationssystem, das erste Endgerät (720a) umfassend:
einen Transceiver (310); und
mindestens einen Prozessor (330), der mit dem Transceiver (310) gekoppelt ist und konfiguriert ist zum:
Empfangen (800, 850), von einem zweiten Endgerät (720b), einer Sidelink-Funkressourcensteuerungs-, RRC, -Rekonfigurationsnachricht, umfassend Sidelink-Rücksetzkonfigurationsinformationen, und
basierend auf der Sidelink-RRC-Rekonfigurationsnachricht, umfassend die Sidelink-Rücksetzkonfigurationsinformationen:
Freigeben eines Sidelink-Funkzugangsträgers für eine PC5-RRC-Verbindung mit dem zweiten Endgerät (720b), und
Rücksetzen (810, 860) einer Medienzugriffssteuerungs-, MAC, -Entität eines Sidelinks für die PC5-RRC-Verbindung mit dem zweiten Endgerät (720b).

9. Erstes Endgerät nach Anspruch 8, wobei das Rücksetzen der MAC-Entität des Sidelinks für die PC5-RRC-Verbindung mit dem zweiten Endgerät mindestens eines aus Folgendem umfasst:
Leeren eines Soft-Puffers eines Sidelink-Verfahrens, das auf die PC5-RRC-Verbindung bezogen ist;
Abbrechen eines ausgelösten Planungsanforderungsverfahrens, das auf die PC5-RRC-Verbindung bezogen ist;
Abbrechen eines ausgelösten Sidelink-Pufferstatusberichtverfahrens, das auf die PC5-RRC-Verbindung bezogen ist;
Stoppen eines Zeitgebers, der auf die PC5-RRC-Verbindung bezogen ist; oder
Initialisieren eines Parameters für einen Sidelink-Puffer für jeden logischen Kanal, der auf die PC5-RRC-Verbindung bezogen ist.

10. Erstes Endgerät nach Anspruch 8, wobei der mindestens eine Prozessor ferner konfiguriert ist zum Konfigurieren eines neuen Sidelink-Funkzugangsträgers für die PC5-RRC-Verbindung mit dem zweiten Endgerät basierend auf Sidelink-Konfigurationsinformationen.

11. Erstes Endgerät nach Anspruch 10, wobei die Sidelink-Konfigurationsinformation enthalten ist in mindestens einem aus empfangenen dedizierten Sidelink-Konfigurationsinformationen, einem Systeminformationsblock, SIB, oder Sidelink-Vorkonfigurationsinformationen.

12. Erstes Endgerät nach Anspruch 8, wobei der mindestens eine Prozessor ferner konfiguriert ist zum, wenn ein Sidelink-Ressourcenallokationsmodus 1 für das erste Endgerät konfiguriert ist und eine Rücksetzung einer MAC-Entität einer Uu-Schnittstelle ausgelöst wird, Durchführen von mindestens einem aus:
Initialisieren eines auf den Sidelink-Ressourcenallokationsmodus 1 bezogenen Parameters,
Abbrechen eines auf den Sidelink-Ressourcenallokationsmodus 1 bezogenen Verfahrens, oder
Stoppen eines auf den Sidelink-Ressourcenallokationsmodus 1 bezogenen Zeitgebers.

13. Erstes Endgerät nach Anspruch 12, wobei der auf den Sidelink-Ressourcenallokationsmodus 1 bezogene Parameter einen Parameter für eine Konfiguration der hybriden automatischen Wiederholungsanforderung, HARQ, umfasst, die auf den Sidelink-Ressourcenallokationsmodus 1 bezogen ist.

14. Erstes Endgerät nach Anspruch 12, wobei das auf den Sidelink-Ressourcenallokationsmodus 1 bezogene Verfahren mindestens eines aus einem Planungsanforderungsverfahren, einem Sidelink-Pufferstatusberichtverfahren oder einer Sidelink-konfigurierten-Gewährung-Bestätigung umfasst.

## Revendications

1. Procédé d'un premier terminal (720a) pour une communication de liaison latérale dans un système de communication sans fil, le procédé comprend :
recevoir (800, 850), depuis un second terminal (720b), un message de reconfiguration de commande de ressource radio, RRC, de liaison latérale comprenant des informations de configuration de réinitialisation de liaison latérale ; et
sur la base du message de reconfiguration RRC de liaison latérale comprenant les informations de configuration de réinitialisation de liaison latérale :
libérer un porteur radio de liaison latérale pour une connexion PC5-RRC au second terminal (720b) ; et
réinitialiser (810, 860) une entité de commande d'accès au média, MAC, d'une liaison latérale pour la connexion PC5-RRC au second terminal (720b).

2. Procédé selon la revendication 1, dans lequel la réinitialisation de l'entité MAC de la liaison latérale pour la connexion PC5-RRC au second terminal comprend au moins une étape des suivantes :
vider un tampon souple d'une procédure de liaison latérale liée à la connexion PC5-RRC ;
annuler une procédure de demande de planification déclenchée liée à la connexion PC5-RRC ;
annuler une procédure de rapport d'état du tampon de liaison latérale déclenchée liée à la connexion PC5-RRC ;
arrêter un minuteur lié à la connexion PC5-RRC ; ou
initialiser un paramètre pour un tampon de liaison latérale pour chaque canal logique lié à la connexion PC5-RRC.

3. Procédé selon la revendication 1, comprend en outre une configuration d'un nouveau porteur radio de liaison latérale pour la connexion PC5-RRC au second terminal sur la base d'informations de configuration de liaison latérale.

4. Procédé selon la revendication 3, dans lequel les informations de configuration de liaison latérale sont incluses dans au moins un parmi des informations de configuration dédiées de liaison latérale reçues, un bloc d'informations de système, SIB, ou des informations de pré-configuration de liaison latérale.

5. Procédé selon la revendication 1, dans lequel, lorsqu'un mode d'attribution de ressources de liaison latérale 1 est configuré pour le premier terminal et qu'une réinitialisation d'une entité MAC d'une interface Uu est déclenchée, le procédé comprend en outre au moins une étape des suivantes :
initialiser un paramètre lié au mode d'attribution de ressources de liaison latérale 1 ;
annuler une procédure liée au mode d'attribution de ressources de liaison latérale 1 ; ou
arrêter un minuteur lié au mode d'attribution de ressources de liaison latérale 1.

6. Procédé selon la revendication 5, dans lequel le paramètre lié au mode d'attribution de ressources de liaison latérale 1 comprend un paramètre pour une configuration de demande de répétition automatique hybride, HARQ, liée au mode d'attribution de ressources de liaison latérale 1.

7. Procédé selon la revendication 5, dans lequel la procédure liée au mode d'attribution de ressources de liaison latérale 1 comprend au moins une parmi une procédure de demande de planification, une procédure de rapport d'état du tampon de liaison latérale ou une confirmation de concession configurée de liaison latérale.

8. Premier terminal (720a) pour une communication de liaison latérale dans un système de communication sans fil, le premier terminal (720a) comprenant :
un émetteur-récepteur (310) ; et
au moins un processeur (330) couplé à l'émetteur-récepteur (310) et configuré pour :
recevoir (800, 850), depuis un second terminal (720b), un message de reconfiguration de commande de ressource radio, RRC, de liaison latérale comprenant des informations de configuration de réinitialisation de liaison latérale ; et
sur la base du message de reconfiguration RRC de liaison latérale comprenant les informations de configuration de réinitialisation de liaison latérale :
libérer un porteur radio de liaison latérale pour une connexion PC5-RRC au second terminal (720b), et
réinitialiser (810, 860) une entité de commande d'accès au média, MAC, d'une liaison latérale pour la connexion PC5-RRC au second terminal (720b).

9. Premier terminal selon la revendication 8, dans lequel la réinitialisation de l'entité MAC de la liaison latérale pour la connexion PC5-RRC au second terminal comprend au moins une étape des suivantes :
vider un tampon souple d'une procédure de liaison latérale liée à la connexion PC5-RRC ;
annuler une procédure de demande de planification déclenchée liée à la connexion PC5-RRC ;
annuler une procédure de rapport d'état du tampon de liaison latérale déclenchée liée à la connexion PC5-RRC ;
arrêter un minuteur lié à la connexion PC5-RRC ; ou
initialiser un paramètre pour un tampon de liaison latérale pour chaque canal logique lié à la connexion PC5-RRC.

10. Premier terminal selon la revendication 8, dans lequel l'au moins un processeur est en outre configuré pour configurer un nouveau porteur radio de liaison latérale pour la connexion PC5-RRC au second terminal sur la base d'informations de configuration de liaison latérale.

11. Premier terminal selon la revendication 10, dans lequel les informations de configuration de liaison latérale sont incluses dans au moins un parmi des informations de configuration dédiées de liaison latérale reçues, un bloc d'informations de système, SIB, ou des informations de pré-configuration de liaison latérale.

12. Premier terminal selon la revendication 8, dans lequel l'au moins un processeur est en outre configuré pour, lorsqu'un mode d'attribution de ressources de liaison latérale 1 est configuré pour le premier terminal et qu'une réinitialisation d'une entité MAC d'une interface Uu est déclenchée, exécuter au moins une étape des suivantes :
initialiser un paramètre lié au mode d'attribution de ressources de liaison latérale 1,
annuler une procédure liée au mode d'attribution de ressources de liaison latérale 1, ou
arrêter un minuteur lié au mode d'attribution de ressources de liaison latérale 1.

13. Premier terminal selon la revendication 12, dans lequel le paramètre lié au mode d'attribution de ressources de liaison latérale 1 comprend un paramètre pour une configuration de demande de répétition automatique hybride, HARQ, liée au mode d'attribution de ressources de liaison latérale 1.

14. Premier terminal selon la revendication 12, dans lequel la procédure liée au mode d'attribution de ressources de liaison latérale 1 comprend au moins une parmi une procédure de demande de planification, une procédure de rapport d'état du tampon de liaison latérale ou une confirmation de concession configurée de liaison latérale.
